# EUROPEAN PATENT SPECIFICATION

(11) **EP 2 565 897 B1**
(45) Date of publication and mention of the grant of the patent: **08.10.2014**
(21) Application number: 12180748.1
(22) Date of filing: 16.08.2012
(51) Int. Cl.: H01H 31/00, H01H 33/12, H02B 13/035, H01H 33/666

(54) **Switchgear and switchgear operating method**
Schaltanlage und Betriebsverfahren der Schaltanlage
Appareillage de commutation et procédé de fonctionnement de l'appareillage de commutation

(30) Priority: 29.08.2011 JP 2011185442
(43) Date of publication of application: 06.03.2013
(73) Proprietor: Hitachi, Ltd., Chiyoda-ku, Tokyo 100-8280 (JP)
(72) Inventor: Utsumi, Tomoaki, Tokyo, 100-8220 (JP); Sato, Takashi, Tokyo, 100-8220 (JP); Shirone, Takashi, Tokyo, 100-8220 (JP); Hosono, Takafumi, Tokyo, 100-8220 (JP); Tsuchiya, Kenji, Tokyo, 100-8220 (JP); Morita, Ayumu, Tokyo, 100-8220 (JP); Kobayashi, Masato, Tokyo, 100-8220 (JP)
(74) Representative: MERH-IP Matias Erny Reichl Hoffmann

(56) References cited:
- EP-A1- 0 599 742
- EP-A1- 1 152 444
- EP-A1- 2 182 536
- US-A- 3 070 680
- US-A- 4 220 837
- US-A1- 2002 104 827
- US-A1- 2005 045 460

## Description

### [Technical Field]

The present invention relates to switchgear and to a switchgear operating method.

### [Background Art]

In many ring-shaped distribution networks, an electrical substation side is provided with switchgear having a circuit breaker based on a vacuum valve (a vacuum interrupter) while a user side is provided with switchgear having a load-break switch based on a vacuum valve. Both ends of one loop circuit are provided with one circuit breaker respectively. The loop circuit is provided with many pieces of switchgear having a load-break switch. Electrical power is supplied to users (load side) through the switchgear having the load-break switch. Conventional technologies concerning the switchgear are described, for instance, in Patent Literature 1 and Patent Literature 2.

The switchgear described in Patent Literature 1 includes, in a metal container, a three-position earthing and disconnecting switch and a vacuum valve. The three-position earthing and disconnecting switch uses a rotor as a contact. One end of the three-position earthing and disconnecting switch is connected to one end of the vacuum valve, and the other end is connected to a high-voltage cable through a bushing conductor and a bushing. The other end of the vacuum valve to which the three-position earthing and disconnecting switch is not connected is connected to a bus bar through a bushing conductor and a bushing and electrically connected to a nearby switchboard. When, in the above-described configuration, the rotor of the three-position earthing and disconnecting switch is connected to the cable side and then the vacuum valve is connected to the cable side, the bus bar is electrically connected to the cable so that electrical power is supplied from the bus bar to the cable.

The switchgear described in Patent Literature 2 connects a vacuum valve having a short-circuit current interruption capability to a three-position earthing and disconnecting switch that linearly operates. The vacuum valve and the three-position earthing and disconnecting switch are integrally molded into a solid insulator.

### [Citation List]

### [Patent Literature]

### [Patent Literature 1]

Japanese Unexamined Patent Application Publication No. Hei 6 (1994)-12948

### [Patent Literature 2]

Japanese Unexamined Patent Application Publication No. 2011-41407

In US 4220837 A, which is considered to disclose the closest prior art, a bi-switch construction is provided having an interrupting device arranged in electrical parallel relation therewith so that the circuit through each of the two switches is made through the interrupting device, and, subsequently, the interrupting device is shorted out in the closed-circuit position of the particular switch being operated. During the opening operation, the interrupting device is activated so that a parallel electrical path is provided in shunt relationship to the particular switch being operated through the interrupting device.

In US 2005 045460 A1 a bypass switch recloser assembly has a first switch assembly connected electrically in series to a second switch assembly. A recloser assembly is connected electrically in series to the first and second switch assemblies and electrically in parallel to the bypass switch assembly. The first, second and bypass switch assemblies and the recloser are mounted on a support assembly.

In EP0599742 A1 a main circuit equipped with at least one main fixed contact and with at least one main moving contact mounted so as to pivot about a spindle and an auxiliary circuit, arranged in parallel with respect to the main circuit and equipped with a fixed auxiliary contact and with a moving auxiliary contact mounted so as to pivot on the same spindle is shown.

### [Summary of Invention]

### [Technical Problem]

When, in the past, many pieces of switchgear were disposed in an electrical distribution system, many load-break switches were inserted in series. Therefore, a main current of a loop circuit flowed into each vacuum valve so that increased loss resulted, for instance, from contact resistance. This increased, for instance, the overall electrical current loss of the electrical distribution system. Hence, a smart electrical distribution network could not be successfully formed.

An object of the present invention is to contribute toward the formation of a smart electrical distribution network.

### [Solution to Problem]

In order to solve the above problem, there is provided switchgear according to claim 1.

According to another aspect, there is provided a method according to claim 10.

### [Advantageous Effects of Invention]

The present invention contributes toward the formation of a smart electrical distribution network.

Problems, constructions, and advantageous effects other than the above will be made clear by the following description of embodiments.

### [Brief Description of Drawings]

Fig. 1 is a front cross-sectional view that illustrates switchgear according to a first embodiment of the present invention and shows how voltage and current are applied.
Fig. 2 is a cross-sectional view illustrating the structure of a vacuum valve unit of the switchgear according to the first embodiment of the present invention.
Fig. 3 is a top view of the switchgear according to the first embodiment of the present invention.
Fig. 4 is a right side view of the switchgear according to the first embodiment of the present invention.
Fig. 5 is a single-phase wiring diagram illustrating the circuit configuration of the switchgear according to the first embodiment of the present invention.
Fig. 6 is a front cross-sectional view that illustrates the switchgear according to the first embodiment of the present invention and shows a state obtained before preparations for circuit breaking.
Fig. 7 is a front cross-sectional view that illustrates the switchgear according to the first embodiment of the present invention and shows a state obtained when the preparations for circuit breaking are made.
Fig. 8 is a front cross-sectional view illustrating a circuit-breaking operation performed by the switchgear according to the first embodiment of the present invention.
Fig. 9 is a front cross-sectional view illustrating a disconnecting operation performed by the switchgear according to the first embodiment of the present invention.
Fig. 10 is a front cross-sectional view illustrating an operation performed in an early-grounded state by the switchgear according to the first embodiment of the present invention.
Fig. 11 is a front cross-sectional view illustrating a closing operation for grounding performed by the switchgear according to the first embodiment of the present invention.
Fig. 12 is a front cross-sectional view illustrating a grounding operation performed by the switchgear according to the first embodiment of the present invention.
Fig. 13 is a front cross-sectional view illustrating an operation performed in a normal grounded state by the switchgear according to the first embodiment of the present invention.
Fig. 14 is a front cross-sectional view illustrating an operation that the switchgear according to the first embodiment of the present invention performs to switch from a grounded state to a disconnected state.
Fig. 15 is a front cross-sectional view that illustrates the switchgear according to a second embodiment of the present invention and shows how voltage and current are applied.
Fig. 16 is a right side view of the switchgear according to the second embodiment of the present invention.

### [Description of Embodiments]

Preferred embodiments of the present invention will now be described with reference to the accompanying drawings. The following examples are merely illustrative. Obviously, the present invention is not limited to the following specific examples. The scope of the present invention is defined by the appended claims. It will be obvious to those skilled in the art that various changes may be made without departing from the scope of the present invention.

### [Example 1]

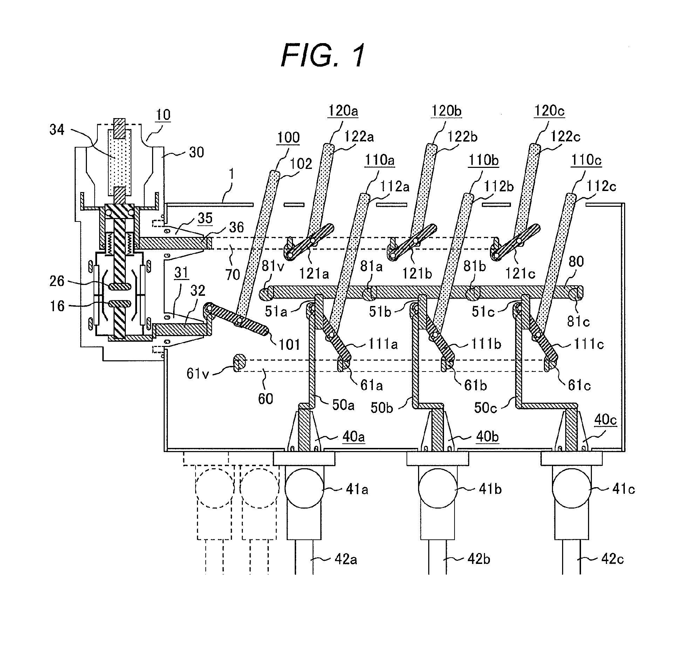

A first embodiment of the present invention will now be described with reference to Figs. 1 to 14.

The following description is given on the assumption that three main circuits (identified by the reference signs a, b, and c) exist per phase. Members related to the main circuits will be described together in order to avoid redundancy. The members identified by the reference signs a, b, and c do not come into contact with or become replaced by the members having different reference signs (e.g., the members identified by the reference signs a and b, the members identified by the reference signs b and c, and the members identified by the reference signs c and a do not come into contact with each other).

As shown in Fig. 1, the switchgear according to the first embodiment of the present invention includes a common bus bar 60, a grounding wire (an earthing conductor) 80, a vacuum valve connection bus bar 70, three-position earthing and disconnecting switches 110a, 110b, 110c, load-side conductors 50a, 50b, 50c, disconnectors 120a, 120b, 120c, a three-position earthing and disconnecting switch 100, a bushing conductor 36, a bushing part 35, a bushing conductor 32, a bushing part 31, and cable bushings 40a, 40b, 40c within a metal container 1 which is grounded. The common bus bar 60 is energized with the electrical current flowing through a main circuit and is disposed in a parallel direction with respect to the metal container 1. The grounding wire 80 is disposed in parallel with the common bus bar 60. The vacuum valve connection bus bar 70 is disposed in parallel with the common bus bar 60 and with the grounding wire 80 and insulatively supported by an insulator not shown. The three-position earthing and disconnecting switches 110a, 110b, 110c can be connected to and disconnected from contacts 61a, 61b, 61c provided for the common bus bar 60 for each main circuit and contacts 81a, 81b, 81c provided for the grounding wire 80 for each main circuit, are disposed next to each other in the direction of extension of the common bus bar 60, and serve as main earthing and disconnecting switches that are disposed in the individual main circuits and capable of switching to a closed position, a grounded position, and a disconnected position. The load-side conductors 50a, 50b, 50c are disposed in the individual main circuits with their one ends fastened to the three-position earthing and disconnecting switches 110a, 110b, 110c. The disconnectors 120a, 120b, 120c are disposed in the individual main circuits. The disconnectors 120a, 120b, 120c are connected at one end to the vacuum valve connection bus bar 70 and capable of selectively connecting to or disconnecting from vacuum valve connection contacts 51a, 51b, 51c at the other end, which are connected to the load-side conductors 50a, 50b, 50c. The three-position earthing and disconnecting switch 100 is capable of switching to a closed position, a grounded position, and a disconnected position by allowing its one end to switch to a position for coming into contact with a contact 81v provided for the grounding wire 80, to a position for coming into contact with a contact 61v provided for the common bus bar 60, or to an intermediate position between the two contacts. The bushing conductor 36 is connected at one end to the vacuum valve connection bus bar 70. The other end of the bushing conductor 36 is protruded from the metal container 1 and connected to one end of a later-described vacuum valve 10. The bushing part 35 is used to mold the bushing conductor 36 into a solid insulator. The bushing conductor 32 is connected at one end to the other end of the three-position earthing and disconnecting switch 100. The other end of the bushing conductor 32 is protruded from the metal container 1 and connected to the other end of the later-described vacuum valve 10. The bushing part 31 is used to mold the bushing conductor 32 into a solid insulator. The cable bushings 40a, 40b, 40c are connected to the other ends of the load-side conductors 50a, 50b, 50c. The circumference of each of the cable bushings 40a, 40b, 40c is molded into a solid insulator.

The cable bushings 40a, 40b, 40c are respectively connected to cable heads 41a, 41b, 41c at a location outside the metal container 1. The cable heads 41a, 41b, 41c are connected to cables 42a, 42b, 42c at a location opposite the cable bushings 40a, 40b, 40c and used to receive electrical power from a power supply side or supply electrical power to a user side (load side). As regards the user side, the connections to the cables 42a, 42b, 42c may be made through fuses (not shown) although no relevant detailed description is given in this document. Broken lines to the left of the cable head 41a shown in Fig. 1 indicate an example of cable heads that are laid out when three phases of a switch unit are disposed.

The three-position earthing and disconnecting switches 110a, 110b, 110c include movable conductors (movable electrodes) 111a, 111b, 111c, which are connected at one end to the load-side conductors 50a, 50b, 50c, and insulating rods 112a, 112b, 112c, which are connected to the middle of the movable conductors 111a, 111b, 111c. When the movable conductors 111a, 111b, 111c are driven by the insulating rods 112a, 112b, 112c, the other ends of the movable conductors 111a, 111b, 111c can be connected to or disconnected from the contacts 61a, 61b, 61c provided for the common bus bar 60 or the contacts 81a, 81b, 81c provided for the grounding wire 80. The three-position earthing and disconnecting switches 110a, 110b, 110c can maintain three positions, namely, a closing position at which the other ends of the movable conductors 111a, 111b, 111c are in contact with the contacts 61a, 61b, 61c, a grounded position at which the other ends of the movable conductors 111a, 111b, 111c are in contact with the contacts 81a, 81b, 81c, and a disconnected position, which is intermediate between the closing position and the grounded position so that required dielectric strength can be acquired with respect to the contacts 61a, 61b, 61c and with respect to the contacts 81a, 81b, 81c. In a normal electrical conduction state (in a normal energized state of the main circuit), the three-position earthing and disconnecting switches 110a, 110b, 110c are in the closing position. Such a closing state of the three-position earthing and disconnecting switches 110a, 110b, 110c is shown in Fig. 1.

The three-position earthing and disconnecting switch 100 includes a movable conductor (a movable electrode) 101 and an insulating rod 102. The movable conductor 101 is connected at one end to the bushing part 31 of the later-described vacuum valve 10. The insulating rod 102 is connected to the middle of the movable conductor 101. When the movable conductor 101 is driven by the insulating rod 102, the other end of the movable conductor 101 can be connected to or disconnected from the contact 61v provided for the common bus bar 60 or the contact 81v provided for the grounding wire 80. The three-position earthing and disconnecting switch 100 can maintain three positions, namely, a closing position at which the other end of the movable conductor 101 is in contact with the contact 61v, a grounded position at which the other end of the movable conductor 101 is in contact with the contact 81v, and a disconnected position, which is intermediate between the closing position and the grounded position so that required dielectric strength can be acquired with respect to the contact 61v and with respect to the contact 81v. In a normal electrical conduction state (in a normal energized state of the main circuit), the three-position earthing and disconnecting switch 100 is in the disconnected position.

The disconnectors 120a, 120b, 120c include movable conductors(movable electrodes) 121a, 121b, 121c and insulating rods 122a, 122b, 122c. The movable conductors 121a, 121b, 121c are connected at one end to the vacuum valve connection bus bar 70. The insulating rods 122a, 122b, 122c are connected to the middle of the movable conductors 121a, 121b, 121c. When the movable conductors 121a, 121b, 121c are driven by the insulating rods 122a, 122b, 122c, the vacuum valve connection contacts 51a, 51b, 51c provided for the load-side conductors 50a, 50b, 50c can be selectively connected to or disconnected from the vacuum valve connection bus bar 70 through the movable conductors 121a, 121b, 121c. The disconnectors 120a, 120b, 120c can maintain two positions, namely, a closing position at which the movable conductors 121a, 121b, 121c are in contact with the contacts 51a, 51b, 51c and a disconnected position at which required dielectric strength can be acquired with respect to the contacts 51a, 51b, 51c. In a normal electrical conduction state (in a normal energized state of the main circuit), the disconnectors 120a, 120b, 120c are in the disconnected position.

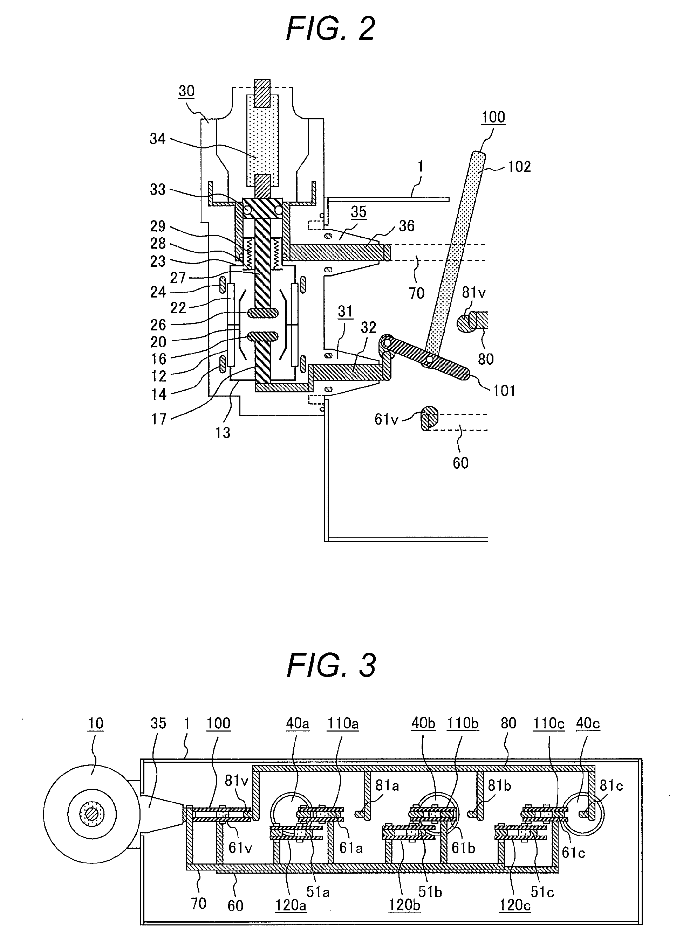

The configuration and operation of the vacuum valve 10 will now be described with reference to Fig. 2.

The vacuum valve 10 is provided with a vacuum container that has a vacuum inside and includes a fixed-side ceramic insulating cylinder 12, a movable-side ceramic insulating cylinder 22, a fixed-side end plate 13, and a movable-side end plate 23. The movable-side ceramic insulating cylinder 22 is coaxially joined to the fixed-side ceramic insulating cylinder 12. The fixed-side end plate 13 is joined to an end portion of the fixed-side ceramic insulating cylinder 12, opposite from the joint side with the movable-side ceramic insulating cylinder 22. The movable-side end plate 23 is joined to an end portion of the movable-side ceramic insulating cylinder 22, opposite from the joint side with the fixed-side ceramic insulating cylinder 12. The vacuum container contains a fixed-side electrode 16, a movable-side electrode 26, a fixed-side holder 17, a movable-side holder 27, an arc shield 20, a bellows 29, and a bellows shield 28. The movable-side electrode 26 is disposed opposite the fixed-side electrode 16 and can be connected to and disconnected from the fixed-side electrode 16. The fixed-side holder 17 is connected to the fixed-side electrode 16 and connected to a side toward the bushing conductor 32. The movable-side holder 27 is connected to the movable-side electrode 26. The arc shield 20 protects the above-mentioned ceramic insulating cylinders from an arc. The bellows 29 is connected to the movable-side end plate 23 and to the movable-side holder 27 and permits the movable-side holder 27 to move axially in a vacuum. The bellows shield 28 is disposed near a joint between the bellows 29 and the movable-side electrode 26 to protect the bellows 29, for instance, from an arc caused by switching. While an internal vacuum is maintained by the bellows 29, the movable-side electrode 26 and the movable-side holder 27 can be axially moved to switch between a closing state and an interrupting state. The bellows shield 28 can also reduce the concentration of an electric field at a bellows end. The vacuum valve 10 has an electrical current application capability and a load cut-off capability.

The outer circumference of a joint between the fixed-side ceramic insulating cylinder 12 and the fixed-side end plate 13 is provided with a fixed-side electric field reduction shield 14 for reducing the concentration of an electric field at the joint. The outer circumference of a joint between the movable-side ceramic insulating cylinder 22 and the movable-side end plate 23 is provided with a movable-side electric field reduction shield 24 for reducing the concentration of an electric field at the joint.

The movable-side holder 27 is connected to the bushing conductor 36 through an electrical contact 33 that permits a sliding contact, and electrically connected to the vacuum valve connection bus bar 70. When the disconnectors 120a, 120b, 120c shown in Fig. 1 are operated, the movable-side holder 27 can be connected to or disconnected from the cable bushings 40a, 40b, 40c, namely, the circuits of an electrical distribution system. For example, a ring-shaped combination of small contact pieces or a spring contact may be used as the slidable electrical contact 33. In place of the slidable electrical contact, an electrode to be connected to the bushing conductor 36 may be disposed apart from the movable-side holder 27 and connected to the movable-side holder 2 7 with a flexible conductor. The fixed-side holder 17 is connected to the bushing conductor 32, and can be connected to either the common bus bar 60 or the grounding wire 80 or placed in a disconnected position, which is intermediate between the common bus bar 60 and the grounding wire 80, depending on the position in which the three-position earthing and disconnecting switch 100 is selectively placed. When the fixed-side holder 17 is connected to the common bus bar 60, a "closing" state is obtained. When the fixed-side holder 17 is connected to the grounding wire 80, a "grounding" state is obtained. When the fixed-side holder 17 is placed in the disconnected position intermediate between the common bus bar 60 and the grounding wire 80, a "disconnecting" state is obtained. The movable-side electrode 26 and the movable-side holder 27 are coupled to an insulating rod (operating rod) 34, which is connected to an operating mechanism (not shown), to permit a switching operation. A position at which the movable-side electrode 26 is in contact with the fixed-side electrode 16 is regarded as a closing position, and a position at which the movable-side electrode 26 is detached from the fixed-side electrode 16 to acquire required dielectric strength is regarded as an interrupting position.

While the vacuum valve is connected to the outside of the metal container 1, an epoxy or other solid insulator 30 is used for molding in such a manner as to cover the insulating rod 34 in an axial direction from the circumference of the vacuum container. The resulting mold covers the circumferences of the bushing conductors 32, 36 to form the bushing parts 31, 35. When the surface of the solid insulator 30, which is used to mold the vacuum valve, is conductive-painted for grounding, no more potential difference exists. Thus, mounting can be accomplished in close contact with the grounded metal container 1.

As shown in Fig. 3, the structural elements of the switchgear are sterically disposed in a space to provide increased space savings.

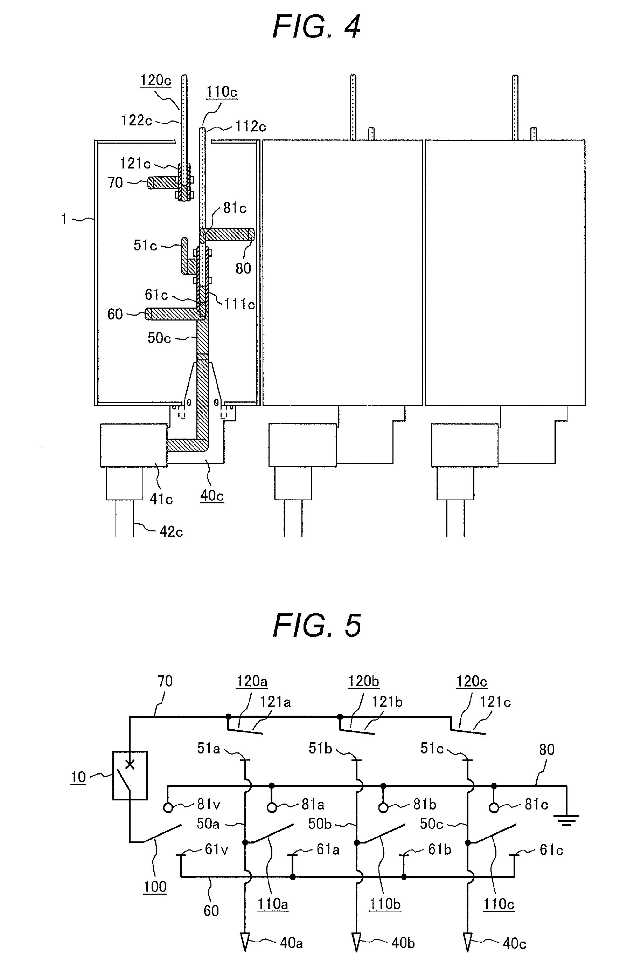

Further, individual phases of the switchgear can be disposed next to each other as shown in Fig. 4. Moreover, each phase of the switchgear is covered with the grounded metal container 1. Therefore, the individual phases of the switchgear can be disposed in close contact with each other without providing a phase-to-phase insulation distance. This makes it possible to reduce installation space requirements.

Operations of the switchgear according to the present embodiment, which is configured as described above, will now be described with reference to Fig. 1 and Figs. 5 to 14. Each operation will be described in relation to the main circuit electrical current for the cable 42a. Procedures for switching the main circuit electrical current for the cable 42a will be described as a representative example. However, it is obvious that the procedures are also applicable to the switching of the other main circuits.

Fig. 5 is a single-phase wiring diagram illustrating the switchgear according to the present embodiment. This figure shows circuitry in a normal electrical conduction state as illustrated in Fig. 1. The cables 42a, 42b, 42c are connected to one ends of the three three-position earthing and disconnecting switches 110a, 110b, 110c, which form each main circuit, through the cable bushings 40a, 40b, 40c and the cable heads 41a, 41b, 41c. The other ends of the three-position earthing and disconnecting switches 110a, 110b, 110c are connected to the common bus bar 60. In this document, each "main circuit" is a series circuit from a bus bar through a main disconnector (a main earthing and disconnecting switch) up to a cable. The reference signs in Fig. 5 correlate to those in Fig. 1. In Fig.1 showing the normal electrical conduction state (the normal energized state of the main circuit), the three-position earthing and disconnecting switches 110a, 110b, 110c included in each main circuit are placed in their closing position, and the common bus bar 60 is electrically connected to the cables 42a, 42b, 42c so that, for example, the electrical power of an electrical substation connected to the bus bar side can be supplied to the user side. In this instance, the three-position earthing and disconnecting switch 100 for a side toward the vacuum valve 10, which is disposed in parallel with each main circuit, is placed in the disconnected position, and the disconnectors 120a, 120b, 120c are also placed in the disconnected position. Therefore, no electrical current flows to the side toward the vacuum valve 10, which has an electrical current application capability and a load cut-off capability.

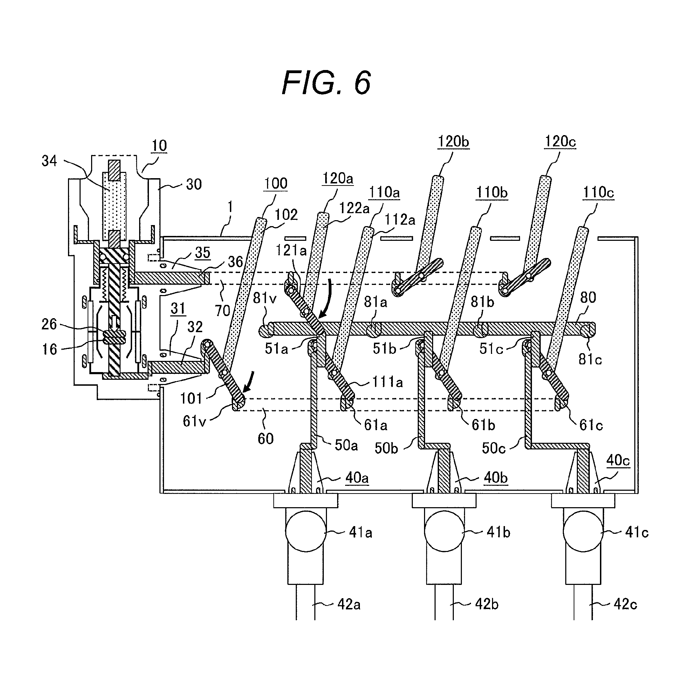

A procedure for switching from a normal electrical conduction state to a disconnected state will now be described with reference to Figs. 6 to 9.

First of all, when a load current is to be interrupted, a check is performed to verify that a state indicated in Fig. 1 is obtained. More specifically, various switches are checked to verify that the vacuumvalve 10 is in the interrupted position, and that the disconnectors 120a, 120b, 120c are in the disconnected position, and further that the three-position earthing and disconnecting switch 100 is in the disconnected position while the three-position earthing and disconnecting switches 110a, 110b, 110c included in each main circuit are in the closing position.

As shown in Fig. 6, the disconnector 120a and the three-position earthing and disconnecting switch 100, which are disposed in parallel with the main circuit are then placed in the closed position. Subsequently, the vacuum valve 10 is placed in the closed position. More specifically, the movable electrode 121a of the disconnector 120a is driven by the insulating rod 122a so that the movable electrode 121a comes into contact with the contact 51a of the load-side conductor 50a to select the closed position and connect to the side toward the cable 42a in a parallel circuit. Further, the movable electrode 101 of the three-position earthing and disconnecting switch 100 is driven by the insulating rod 102 so that the movable electrode 101 comes into contact with the contact 61v of the common bus bar 60 to select the closed position. Subsequently, the movable-side electrode 26 of the vacuum valve 10 is driven by the insulating rod 34 so that the movable-side electrode 26 comes into contact with the fixed-side electrode 16 to select the closed position.

In the state shown in Fig. 6, for the electrical current flowing to the cable 42a of the electrical current in the main circuit, there are two parallel circuits (two paths). In one path, the electrical current flows to the vacuum valve connection contact 51a through the three-position earthing and disconnecting switch 100, the vacuum valve 10, and the vacuum valve connection bus bar 70. In the other path, the electrical current flows through the main circuit, in which the electrical current flows through the three-position earthing and disconnecting switch 110a.

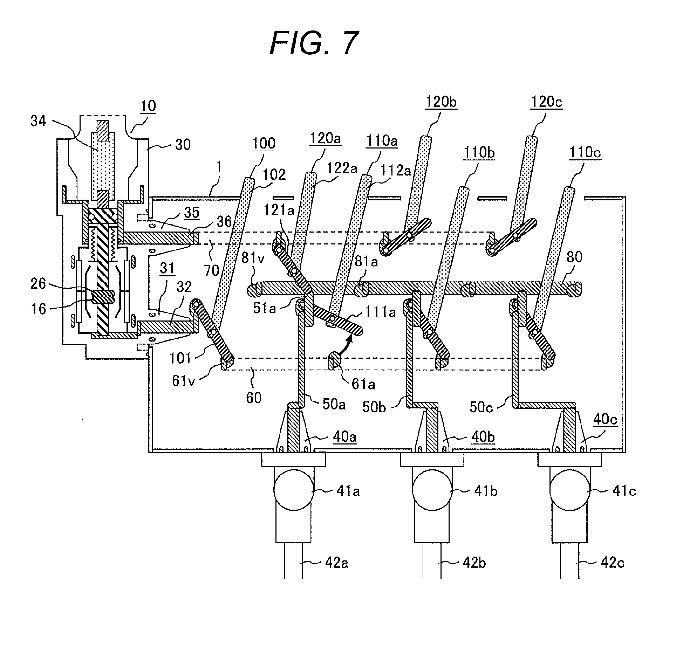

Subsequently, the three-position earthing and disconnecting switch 110a is placed in the disconnected position as shown in Fig. 7. More specifically, the movable electrode 111a of the three-position earthing and disconnecting switch 110a is driven by the insulating rod 112a to select the disconnected position as shown in Fig. 7. By this operation, the electrical current does not flow to the three-position earthing and disconnecting switch 110a in the main circuit. Thus, the electrical current flowing in the cable 42a is entirely diverted to the vacuum valve 10.

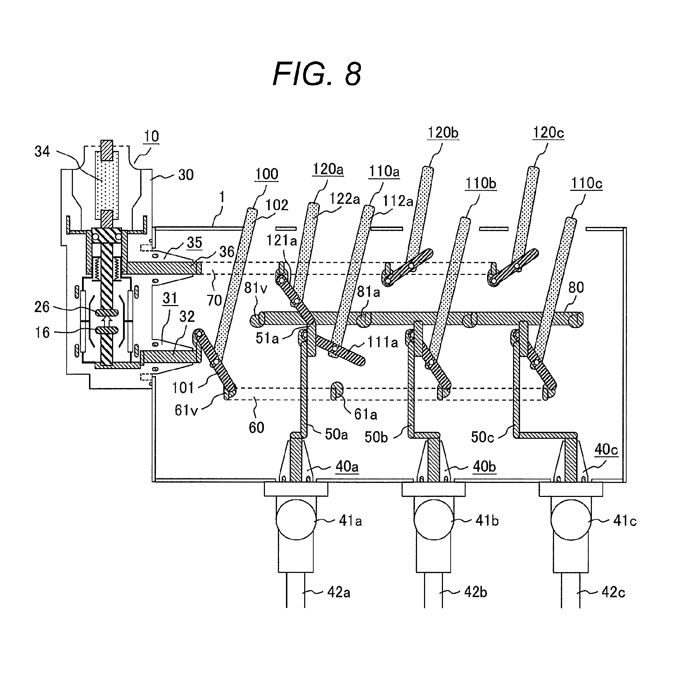

After the state shown in Fig. 7 is obtained, the movable-side electrode 26 is driven in the vacuumvalve 10 having a load cut-off capability, as indicated in Fig. 8, to select the interrupted position. As a result, the main circuit electrical current to the cable 42a is interrupted.

After the interrupted state shown in Fig. 8 is obtained, the disconnector 120a and the three-position earthing and disconnecting switch 100, which are disposed in parallel with the main circuit and in series with the vacuum valve 10, are isolated from the main circuit and switched to the disconnected state. More specifically, the movable electrode 121a of the disconnector 120a is driven by the insulating rod 122a to select the disconnected position at which required dielectric strength is acquired with respect to the load-side conductor 50a. Further, the movable electrode 101 of the three-position earthing and disconnecting switch 100 is driven by the insulating rod 102 to select the disconnected position at which required dielectric strength is acquired with respect to the common bus bar 60 and with respect to the grounding wire 80. As a result, the cable 42a is isolated from the main circuit and placed in the disconnected state. Meanwhile, the cable 42b and the cable 42c are placed in a connected state.

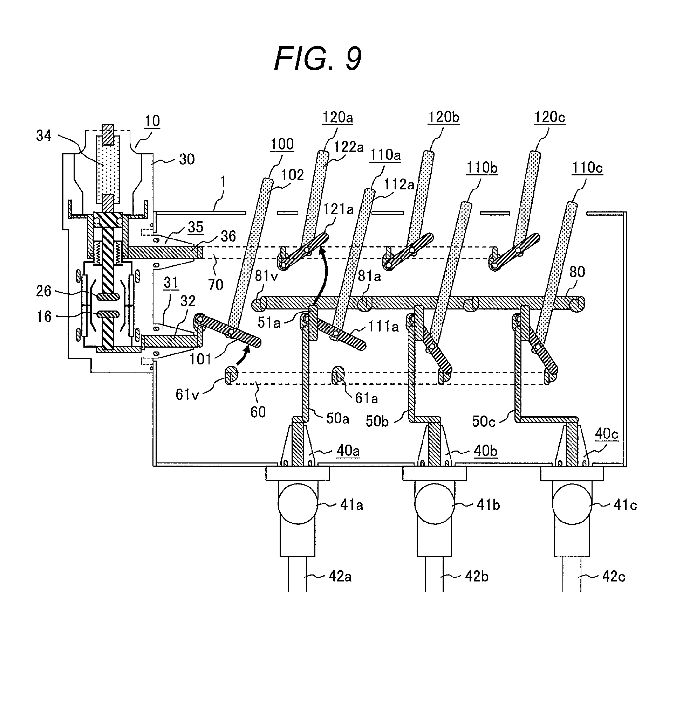

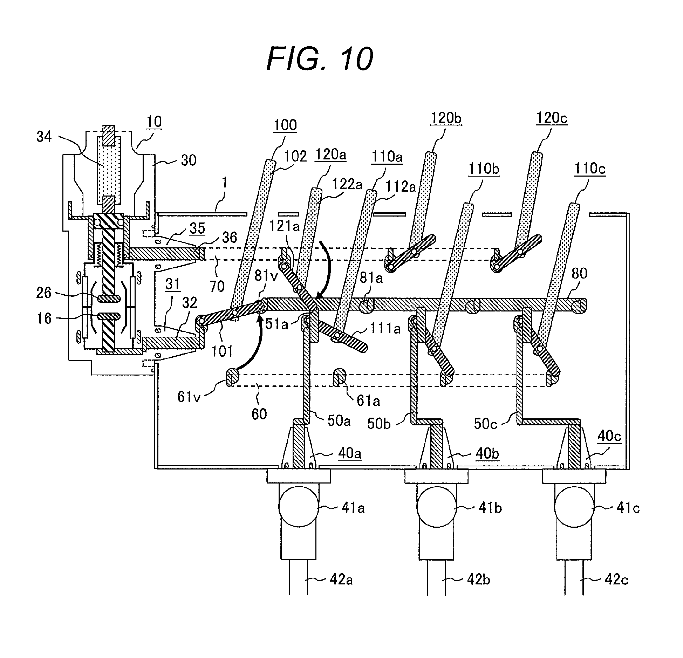

An operation performed to switch from the disconnected state to the grounded state will now be described with reference to Figs. 9 to 13. When the cable 42a is to be grounded, a check is initially performed to verify that the state shown in Fig. 9 is obtained. More specifically, the check is performed to verify that the vacuum valve 10 is in the interrupted position, and that the three-position earthing and disconnecting switch 110a is in the disconnected position, and further that the disconnector 120a is in the disconnected position. The disconnector 120a may be in the closed position as shown in Fig. 10. Further, the movable electrode 101 is driven in the three-position earthing and disconnecting switch 100 so that the movable electrode 101 comes into contact with the contact 81v of the grounding wire 80 to select the grounded position as indicated in Fig. 10. In this instance, the fixed-side electrode 16 of the vacuum valve 10 is connected to the grounding wire 80 so that the movable-side electrode 26 is connected to the cable 42a through the vacuum valve connection bus bar 70.

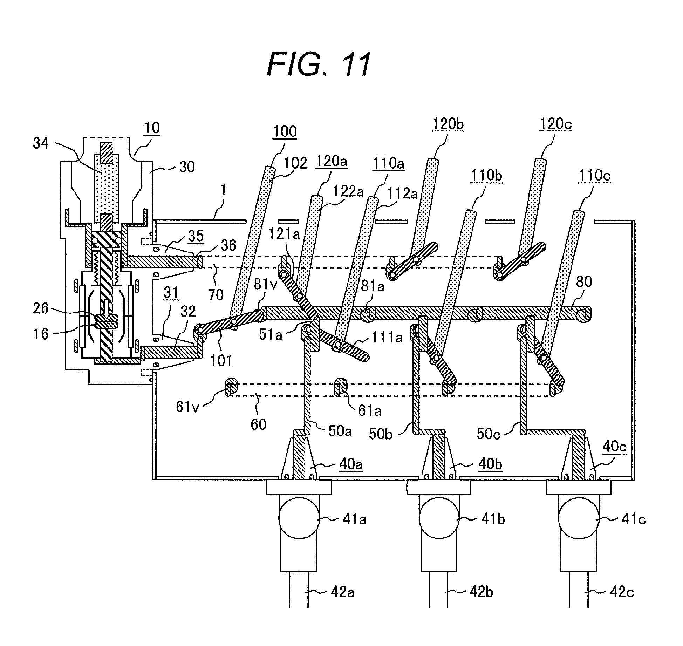

After the above-described state is obtained, as shown in Fig. 11, the movable-side electrode 26 of the vacuum valve 10 which has an electrical current application capability is driven so that the movable-side electrode 26 comes into contact with the fixed-side electrode 16 to select the closed position. This causes the cable 42a to be grounded. As the closing operation for grounding is performed in the vacuum valve 10, the closing operation for grounding can be achieved without causing any substantial damage to the electrodes even if a certain amount of arc is generated, for instance, by an electrical charge remaining in the cable 42a. Moreover, even if a large electrical current flows when the closing operation for grounding is performed due to an erroneous operation while the cable 42a is electrically charged, the generated arc is confined within the vacuum valve. As the generated arc does not go out of the vacuum valve, the damage to the switch unit is limited.

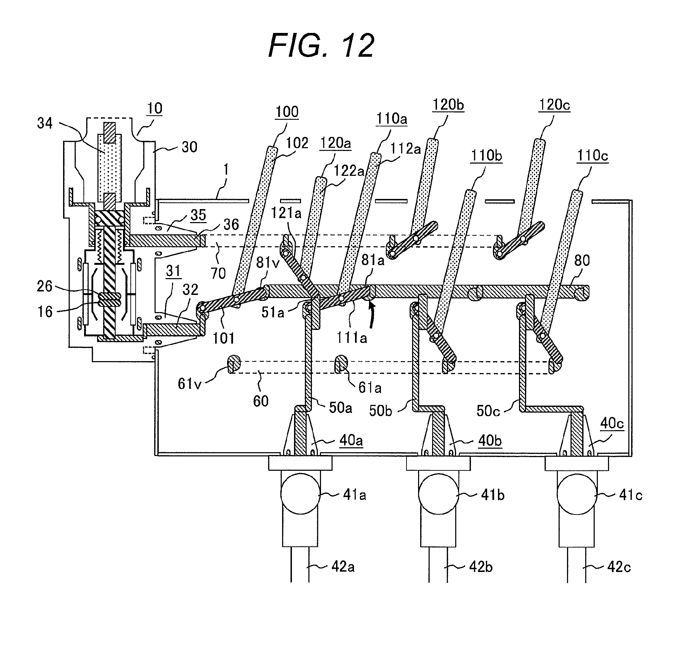

After the cable 42a is grounded to maintain the state shown in Fig. 11, as shown in Fig. 12, the movable electrode 111a is driven in the three-position earthing and disconnecting switch 110a so that the movable electrode 111a comes into contact with the contact 81a of the grounding wire 80 to select the grounded position.

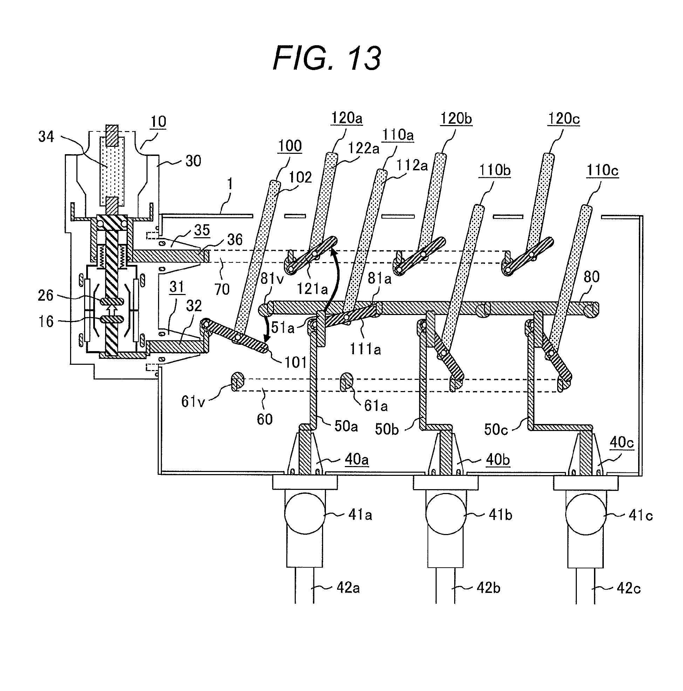

Subsequently, the vacuum valve 10 is placed in the interrupted position as shown in Fig. 13 to isolate the disconnector 120a from the main circuit and switch into the disconnected state. Further, the three-position earthing and disconnecting switch 100 is switched to the disconnected state. More specifically, the movable-side electrode 26 of the vacuum valve 10 is driven by the insulating rod 34 so that the movable-side electrode 26 is isolated from the fixed-side electrode 16 to select the interrupted position. Further, the movable electrode 121a of the disconnector 120a is driven by the insulating rod 122a to select the disconnected position at which required dielectric strength is acquired with respect to the load-side conductor 50a. Furthermore, the movable electrode 101 of the three-position earthing and disconnecting switch 100 is driven by the insulating rod 102 to select the disconnected position at which required dielectric strength is acquired with respect to the common bus bar 60 and with respect to the grounding wire 80. The state shown in Fig. 13 is a normal electrical conduction state for the cables 42b, 42c connected to the common bus bar 60 while the cable 42a is grounded.

When the above steps are performed in reverse order (grounding -> disconnecting -> energizing), the cable 42a reverts from the grounded state shown in Fig. 13 to a state where voltage and current are applied to the main circuit as shown in Fig. 1.

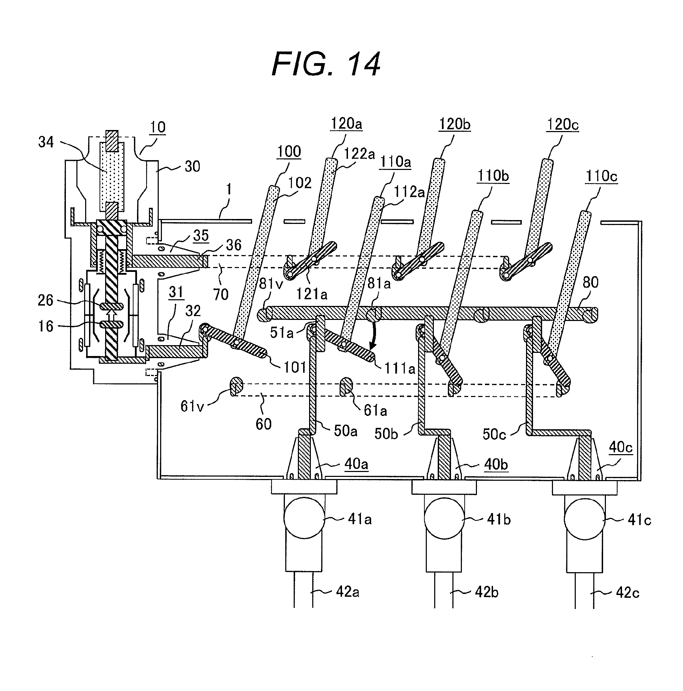

When a switch is to be made from the grounded state to the disconnected state, the three-position earthing and disconnecting switch 110 of the main circuit can be suddenly driven to select the disconnected state as indicated in Fig. 14 because substantially no electrical current flows in the grounded cable 42a.

Next, when the main circuit for the cable 42a is to be made from the disconnected state to the closed state, state transitions are made by reverting to the state shown in Fig. 7 from the state shown in Fig. 9 through the state shown in Fig. 8. In other words, the disconnector 120a and the three-position earthing and disconnecting switch 100, which are disposed in parallel with the main circuit, are placed in the closed position. Subsequently, the vacuum valve 10 is placed in the closed position. More specifically, the movable electrode 121a of the disconnector 120a is driven by the insulating rod 122a so that the movable electrode 121a comes into contact with the contact 51a of the load-side conductor 50a to select the closed position and connects to the side toward the cable 42a in a parallel circuit. Further, the movable electrode 101 of the three-position earthing and disconnecting switch 100 is driven by the insulating rod 102 so that the movable electrode 101 comes into contact with the contact 61v of the common bus bar 60 to select the closed position. Subsequently, the movable-side electrode 26 of the vacuum valve 10 is driven by the insulating rod 34 so that the movable-side electrode 26 comes into contact with the fixed-side electrode 16 to select the closed position.

Subsequently, the three-position earthing and disconnecting switch 110a of the main circuit is placed in the closed state as shown in Fig. 6. More specifically, the movable electrode 111a of the three-position earthing and disconnecting switch 110a is driven by the insulating rod 112a to select the closed state shown in Fig. 6. Performing this operation permits an electrical current to flow to the three-position earthing and disconnecting switch 110a in the main circuit. In the state shown in Fig. 6, for the electrical current flowing to the cable 42a of the electrical current in the main circuit, there are two parallel circuits (two paths). In one path, the electrical current flows to the vacuum valve connection contact 51a through the three-position earthing and disconnecting switch 100, the vacuum valve 10, and the vacuum valve connection bus bar 70. In the other path, the electrical current flows through the main circuit, in which the electrical current flows through the three-position earthing and disconnecting switch 110a.

After the state shown in Fig. 6 is obtained, the movable-side electrode 26 is driven in the vacuumvalve 10 having a load cut-off capability to select the interrupted position. As a result, the path of an electrical current flowing to the cable 42a is limited to the main circuit that runs through the three-position earthing and disconnecting switch 110a.

Subsequently, the disconnector 120a and the three-position earthing and disconnecting switch 100, which are disposed in parallel with the main circuit and in series with the vacuum valve 10, are isolated from the main circuit as shown in Fig. 1 to switch to the disconnected state. More specifically, the movable electrode 121a of the disconnector 120a is driven by the insulating rod 122a to select the disconnected position at which required dielectric strength is acquired with respect to the load-side conductor 50a. Further, the movable electrode 101 of the three-position earthing and disconnecting switch 100 is driven by the insulating rod 102 to select the disconnected position at which required dielectric strength is acquired with respect to the common bus bar 60 and with respect to the grounding wire 80. This enables the cable 42a to revert to a normal electrical conduction state shown in Fig. 1.

Although the above description relates to the cable 42a only, the above-described procedures for load cut-off, disconnection, grounding, and closing can also be applied to the other cables 42b, 42c.

When the above operating procedures are performed, the switchgear according to the present embodiment can reduce the electrical current loss of the electrical distribution system because, in a normal electrical conduction state, the main circuit electrical current path does not include the vacuum valve 10 having an electrical current application capability and a load cut-off capability. Further, as one vacuum valve 10 can open and close a plurality of main circuits, the number of vacuum valves formerly disposed in individual main circuits can be decreased to one. This makes it possible to reduce installation space requirements by means of functional integration and substantially reduce the cost of switchgear.

When one or more disconnectors are disposed in series with the vacuum valve 10, which forms a load-break switch, and a disconnector for a main circuit is disposed in parallel with the load-break switch and with the disconnectors, the load-break switch can be isolated from the main circuit in a normal electrical conduction state so that a main electrical current flows to the disconnector in the main circuit only. At the time of interrupting the electrical current of the main circuit or making the main circuit, the disconnectors connected in series with the load-break switch is changed to divert and supply the main circuit electrical current through the load-break switch. Then, the interrupting the electrical current of the main circuit or the making the main circuit is performed to switch a load current. Subsequently, the load-break switch is isolated. This ensures that the main circuit electrical current flows to the load-break switch only at the time of switching. In a normal electrical conduction state, therefore, the electrical current flows to the disconnector in the main circuit only.

If short-circuiting occurs in a ring-shaped distribution network, circuit breakers at both ends of a short-circuited loop circuit are allowed to perform a circuit breaking operation. The loop circuit is then isolated from the electrical distribution system to prevent the other circuits from being affected by short-circuiting. It is therefore necessary that the circuit breaker for switchgear on the side toward an electrical substation be constantly inserted in series with a circuit in order to immediately interrupt a short-circuit current in the event of short-circuiting. However, the load-break switch for a ring main unit is generally for opening/closing and switching main circuit and need not always be inserted in series with a circuit because it does not interrupt a short-circuit current. Consequently, the switchgear according to the present embodiment is suitably applicable to a ring main unit.

Further, in a normal electrical conduction state, the main circuit is formed by the three-position earthing and disconnecting switches 110a, 110b, 110c. Therefore, when the employed configuration is such that the vacuum valve 10 is isolated from the main circuit, the vacuum valve 10 can be inspected as needed.

Furthermore, even if leakage occurs in the vacuum valve 10 for some reason, the electrical conduction state and the disconnected state can be maintained because the vacuum valve 10 is not included in the main circuit in a normal electrical conduction state. This makes it possible to shorten the duration of power failure of the electrical distribution system or avoid the occurrence of power failure.

The present embodiment has been described on the assumption that the vacuum valve 10 is used as the load-break switch. However, the load-break switch is not limited to a vacuumvalve. Commonly used other load-break switches may also be used.

Further, when high-pressure dry air, CO₂ gas, SF₆ gas, or vacuum or other insulating gas (a vacuum may not generally be counted as an insulating gas because of its meaning; however, the term "insulating gas" is used here comprehensively as a term that includes a vacuum) is filled into the metal container 1 and insulated, the distance of insulation can be reduced. This makes it possible to reduce the sizes of the three-position earthing and disconnecting switches 100, 110a, 110b, 110c and disconnectors 120a, 120b, 120c and make the entire switchgear compact.

Furthermore, the high-voltage common bus bar 60 and the vacuumvalve connection bus bar 70, for example, can be insulated by filling the interior of the metal container 1 with an insulating gas. This will lead to an increased degree of hermetic closure and suppress an increase in humidity. Consequently, moisture condensation can be prevented. This provides an advantage in that it is possible to further reduce the insulation distance and further decrease the size of the switchgear.

Moreover, the present embodiment is configured so that the vacuum valve 10 is molded into a solid insulator whose surface is grounded with conductive paint and brought into external contact with the metal container 1. However, the vacuum valve 10 may be disposed in the metal container 1. When high-pressure dry air, SF₆ gas, or the like is filled into the metal container 1 in a situation where the vacuum valve 10 is disposed in the metal container 1, it is possible to provide adequate insulation from the surrounding area even if the use of a resin mold is omitted. This results in a simplified structure.

In the present embodiment, each phase of the switchgear is covered with the grounded metal container 1. In addition, the surface of the solid insulator 30 that covers the circumference of the vacuum valve 10 is coated with grounded conductive paint. This feature protects workers against electrical shock hazards.

Further, as each phase is grounded, it is possible to prevent interphase short-circuiting, which generates a large fault current, and increase the safety of the electrical distribution system. If a gas other than air is used as a filler gas, it is possible to dispose units for three phases in the metal container 1 and use ground plates to differentiate the individual phases in the metal container 1.

In the present embodiment, the three-position earthing and disconnecting switches and other switches are of a blade type. Therefore, the circumference of such switches need not be solid-insulated. This makes it possible to significantly reduce the amount of mold to be used. In addition, as the three-position earthing and disconnecting switches and other switches are housed in the single metal container 1, an increase in the size of the switchgear is avoided.

### [Example 2]

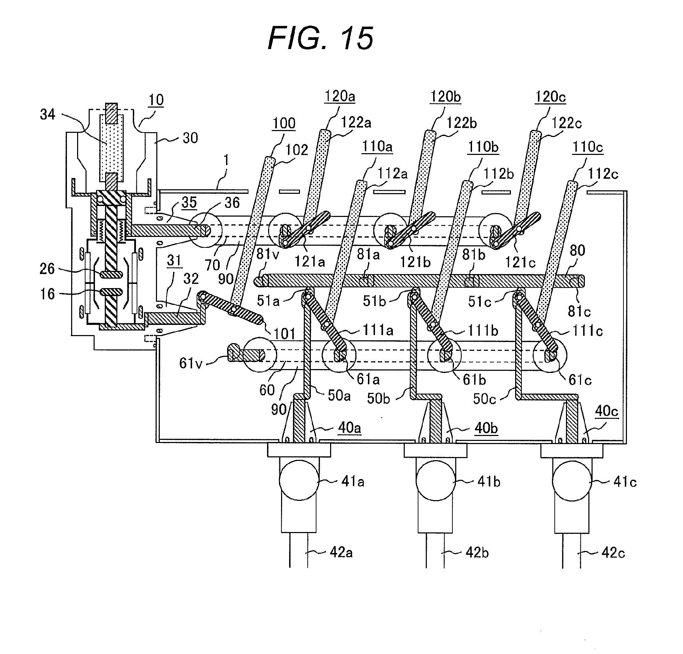

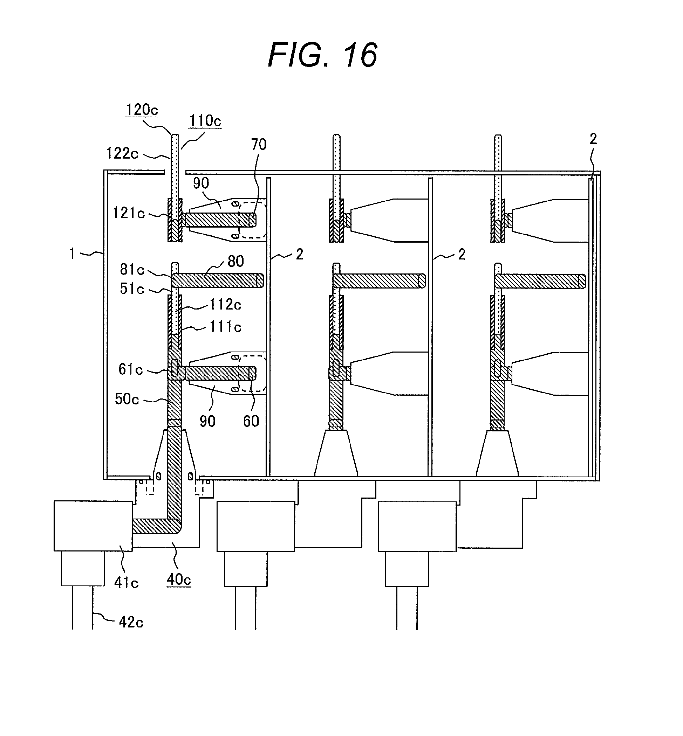

A second embodiment of the present invention will now be described with reference to Figs. 15 and 16. Only the differences between the first and second embodiments will be described below while omitting portions (configuration, operations, and advantageous effects) common to the first and second embodiments.

In the second embodiment, the common bus bar 60 and the vacuum valve connection bus bar 70 are molded with resin 90 as shown in Figs. 15 and 16. The vacuum valve connection bus bar 70 insulatively supports the movable conductors 121a, 121b, 121c of the disconnectors 120a, 120b, 120c. Providing solid insulation makes it possible to reduce the bus bar-to-ground plate insulation distance and make the entire switchgear compact. Further, when the common bus bar 60, the vacuum valve connection bus bar 70, and the grounding wire 80 are fastened to a ground plate 2 shown in Fig. 16, one phase can be mostly assembled. When individual phases are assembled on the ground plate 2 and inserted altogether into the metal container 1, increased ease of manufacture is provided to achieve enhanced productivity.

When a vacuum valve having a short-circuit current interruption capability is used as the vacuum valve 10 and applied to the above-described switchgear, the flow of a short-circuit current caused by an erroneous operation can be immediately interrupted by the vacuum valve to prevent the influence of short-circuiting from spreading.

The foregoing embodiments have been described on the assumption that a load-break switch is used. However, a circuit breaker capable of interrupting a fault current as well may also be used in place of the load-break switch.

### [Reference Signs List]

1... Metal container
10... Vacuum valve
12... Fixed-side ceramic insulating cylinder
13... Fixed-side end plate
14... Fixed-side electric field reduction shield
16... Fixed-side electrode
17... Fixed-side holder
20... Arc shield
22... Movable-side ceramic insulating cylinder
23... Movable-side end plate
24... Movable-side electric field reduction shield
26... Movable-side electrode
27... Movable-side holder
28... Bellows shield
29... Bellows
30... Solid insulator
31, 35... Bushing part
32, 36... Bushing conductor
33... Electrical contact
34, 102, 112a, 112b, 112c, 122a, 122b, 122c... Insulating rod
40a, 40b, 40c... Cable bushing
41a, 41b, 41c... Cable head
42a, 42b, 42c... Cable
50a, 50b, 50c... Load-side conductor
51a, 51b, 51c... Vacuum valve connection contact
60... Common bus bar
61a, 61b, 61c, 61v, 81a, 81b, 81c, 81v... Contact
70... Vacuum valve connection bus bar
80... Grounding wire
90... Resin
100... Three-position earthing and disconnecting switch (vacuum valve side)
101, 111a, 111b, 111c, 121a, 121b, 121c... Movable conductor (movable electrode)
110a, 110b, 110c... Three-position earthing and disconnecting switch (load side)
120a, 120b, 120c... Disconnector

## Claims

1. Switchgear comprising:
a main circuit having a first main disconnector (110a, 110b, 110c), which is capable of selectively switching between a closing position and a disconnecting position, and a first cable (42a, 42b, 42c), which is connected to one end of the first main disconnector (110a, 110b, 110c);
a bus bar (60), which is connected to the other end of the first main disconnector (110a, 110b, 110c);
a second disconnector (120a, 120b, 120c), which is disposed in parallel with the first main disconnector (110a, 110b, 110c); and
a load-break switch (10) or a circuit breaker, which is disposed in parallel with the first main disconnector (110a, 110b, 110c) and in series with the second disconnector (120a, 120b, 120c);
another main circuit having a third main disconnector (110a, 110b, 110c), which is connected at one end to the bus bar (60) and capable of selectively switching between a closing position and a disconnecting position, and a second cable (42a, 42b, 42c), which is connected to the other end of the third main disconnector (110a, 110b, 110c);
a fourth disconnector (120a, 120b, 120c), which is connected in parallel with the third main disconnector (110a, 110b, 110c) and connected in series with the load-break switch (10) or the circuit breaker; and
a connection wire (70), which connects the second disconnector (120a, 120b, 120c) tothefourthdisconnector (120a, 120b, 120c);
**characterized in that**
a fifth disconnector (100) is disposed at only one end of the load-break switch (10) or of the circuit breaker, and the second and fourth disconnectors (120a, 120b, 120c) are disposed at the other end the of load-break switch (10) or of the circuit breaker at which the fifth disconnector (100) is not disposed, wherein the fifth disconnector (100) is an earthing and disconnecting switch (100) capable of selecting a closed state, a disconnected state, or a grounded state and is selectively connected to either the bus bar (60) or a grounding wire (80), which is at a ground potential, to switch between a closed state and a grounded state, and wherein the second and fourth disconnectors (120a, 120b, 120c) are provided for the first and second cables (42a, 42b, 42c) respectively and connected to the first and second cables (42a, 42b, 42c) respectively.

2. The switchgear according to claim 1, wherein the connection wire (70) and the bus bar (60) are solid-insulated (90).

3. The switchgear according to claim 2, wherein the solid-insulated connection wire (70) and bus bar (60) are fastened to a ground plate (2), which is disposed between phases.

4. The switchgear according to any one of claims 1 to 3, wherein the first and third main disconnector (110a, 110b, 110c) are main earthing and disconnecting switches capable of selecting a closed state, a disconnected state, or a grounded state.

5. The switchgear according to any one of claims 1 to 4, wherein the load-break switch (10) or the circuit breaker has a load cut-off capability while the first and third main disconnector (110a, 110b, 110c) and the fifth, second and fourth disconnector (100, 120a, 120b, 120c) do not have the load cut-off capability.

6. The switchgear according to any one of claims 1 to 5, wherein the second, fourth and fifth disconnector (100, 120a, 120b, 120c) and the first and third main disconnector (110a, 110b, 110c) each include a blade-type movable electrode (101, 111a, 111b, 111c, 121a, 121b, 121c) and a fixed electrode (51a, 51b, 51c, 61a, 61b, 61c, 61v, 81a, 81b, 81c, 81v), which comes into contact with the movable electrode (101, 111a, 111b, 111c, 121a, 121b, 121c), and are disposed in a container (1) provided for each phase.

7. The switchgear according to claim 6, wherein the container (1) is hermetically closed; wherein an insulating gas is enclosed within the hermetically-closed container (1); and wherein individual phases are separated by the ground plate (2).

8. The switchgear according to claim 7, wherein the load-break switch (10) is a vacuum valve (10) whose circumference is solid-insulated with a solid insulator (30) ; wherein the surface of the solid insulator (30) is covered with grounded conductive paint; and wherein the solid-insulated vacuum valve (10) is brought into external contact with the hermetically-closed container (1).

9. The switchgear according to claim 7, wherein the load-break switch (10) is the vacuum valve (10); and wherein the vacuum valve (10) is housed in the hermetically-closed container (1) .

10. A switchgear operating method for operating switchgear according to any of claims 1 to 9 that includes a load-break switch (10) or a circuit breaker, which opens and closes one or more units of a main circuit, and a first cable (42a, 42b, 42c), which is disposed for each of the one or more units of the main circuit and connected to a load side,
wherein the switchgear further includes a second disconnector (100, 120a, 120b, 120c), which is provided for and disposed in parallel with each of the one or more units of the main circuit and disposed in series with the load-break switch (10) or the circuit breaker and
a first main disconnector (110a, 110b, 110c), which is disposed between each of the one or more units of the main circuit and each of the one or more units of the first cable (42a, 42b, 42c);
the switchgear operating method comprising the steps of:
forming an electrical current path excluding the load-break switch (10) or the circuit breaker and energizing the main circuit at the time of normal electrical conduction; and
switching to an electrical current path including the load-break switch (10) or the circuit breaker and interrupting the electrical current of the main circuit or making the main circuit by the load-break switch or the circuit breaker at the time of interrupting the electrical current of the main circuit or making the main circuit;
the switchgear operating method further comprising the steps of, when switching one of the units of the main circuit from a closed state to a disconnected state:
connecting the second disconnector (100, 120a, 120b, 120c), which is disposed in parallel with the one of the units of the main circuit, to the one of the units of the main circuit;
after the step above, closing the load-break switch (10) or the circuit breaker;
after the step above, switching the first main disconnector (110a, 110b, 110c)to a disconnected state;
after the step above, switching the load-break switch (10) or the circuit breaker from a closed state to an interrupted state; and
after the step above, isolating the second disconnector (100, 120a, 120b, 120c) from the one of the units of the main circuit to switch to a disconnected state.

11. The switchgear operating method according to claim 10, comprising the steps of, when switching one of the units of the main circuit from a disconnected state to a closed state:
connecting the second disconnector (120a, 120b, 120c), which is disposed in parallel with the one of the units of the main circuit, to the one of the units of the main circuit;
after the step above, closing the load-break switch (10) or the circuit breaker;
after the step above, switching the first main disconnector (110a, 110b, 110c) to a closed state;
after the step above, switching the load-break switch (10) or the circuit breaker from a closed state to an interrupted state; and
after the step above, isolating the second disconnector (100, 120a, 120b, 120c) from the one of the units of the main circuit to switch to a disconnected state.

12. The switchgear operating method according to claim 10 or 11, wherein the fifth disconnector (100) is disposed at only one end of the load-break switch (10) or of the circuit breaker; and wherein switching of the second disconnector (120a, 120b, 120c) is performed in the same step of the above steps.

13. The switchgear operating method according to any one of claims 10 or 11, wherein the switchgear includes a earthing and disconnecting switch (100), which is disposed between the load-break switch (10) or the circuit breaker and the main circuit to select a closed state, a disconnected state, or a grounded state, and a main earthing and disconnecting switch (110a, 110b, 110c), which is disposed between the main circuit and the first cable (42a, 42b, 42c), the switchgear operating method comprising the steps of, when switching one of the units of the main circuit from a disconnected state to a grounded state:
connecting the second disconnector (120a, 120b, 120c) to the one of the units of the main circuit and switching the earthing and disconnecting switch (100) to a grounded state;
after the step above, closing the load-break switch (10) or the circuit breaker;
after the step above, switching the main earthing and disconnecting switch (110a, 110b, 110c) to a grounded state; and
after the step above, switching the load-break switch (10) or the circuit breaker from a closed state to an interrupted state, switching the earthing and disconnecting switch (100) to a disconnected state, and isolating the second disconnector (120a, 120b, 120c) from the one of the units of the main circuit to switch to a disconnected state.

14. The switchgear operating method according to claim 13, wherein switching one of the units of the main circuit from the disconnected state to the grounded state is accomplished by switching the main earthing and disconnecting switch (110a, 110b, 110c) to a disconnected state.

## Patentansprüche

1. Schaltvorrichtung, die umfasst:
eine Hauptschaltung, die einen Haupttrennschalter (110a, 110b, 110c), der wahlweise zwischen einer Schließposition und einer Trennposition schalten kann, und ein erstes Kabel (42a, 42b, 42c), das mit einem Ende des ersten Haupttrennschalters (110a, 110b, 110c) verbunden ist, besitzt;
eine Sammelschiene (60), die mit dem anderen Ende des ersten Haupttrennschalters (110a, 110b, 110c) verbunden ist;
einen zweiten Trennschalter (120a, 120b, 120c), der parallel zu dem ersten Haupttrennschalter (110a, 110b, 110c) angeordnet ist; und
einen Lasttrennschalter (10) oder einen Schutzschalter, der parallel zu dem ersten Haupttrennschalter (110a, 110b, 110c) und in Reihe mit dem zweiten Trennschalter (120a, 120b, 120c) angeordnet ist;
eine weitere Hauptschaltung, die einen dritten Haupttrennschalter (110a, 110b, 110c), der an einem Ende mit der Sammelschiene (60) verbunden ist und wahlweise zwischen einer Schließposition und einer Trennposition schalten kann, und ein zweites Kabel (42a, 42b, 42c), das mit dem anderen Ende des dritten Haupttrennschalters (110a, 110b, 110c) verbunden ist, besitzt;
einen vierten Trennschalter (120a, 120b, 120c), der parallel zu dem dritten Haupttrennschalter (110a, 110b, 110c) und in Reihe mit dem Lasttrennschalter (10) oder dem Schutzschalter geschaltet ist; und
ein Verbindungsdraht (70), der den zweiten Trennschalter (120a, 120b, 120c) mit dem vierten Trennschalter (120a, 120b, 120c) verbindet;
**dadurch gekennzeichnet, dass**
ein fünfter Trennschalter (100) nur an einem Ende des Lasttrennschalters (10) oder des Schutzschalters angeordnet ist, und der zweite und der vierte Trennschalter (120a, 120b, 120c) an dem anderen Ende des Lasttrennschalters (10) oder des Schutzschalters angeordnet sind, an dem der fünfte Trennschalter (100) nicht angeordnet ist, wobei der fünfte Trennschalter (100) ein Masse- und Trennschalter (100) ist, der einen geschlossenen Zustand, einen getrennten Zustand oder einen Massezustand auswählen kann und wahlweise entweder mit der Sammelschiene (60) oder mit einem Massedraht (80), der auf einem Massepotential liegt, verbunden ist, um zwischen einem geschlossenen Zustand und einem Massezustand umzuschalten, und wobei der zweite und der vierte Trennschalter (120a, 120b, 120c) jeweils für das erste und das zweite Kabel (42a, 42b, 42c) vorgesehen sind und jeweils mit dem ersten und dem zweiten Kabel (42a, 42b, 42c) verbunden sind.

2. Schaltvorrichtung nach Anspruch 1, wobei der Verbindungsdraht (70) und die Sammelschiene (60) feststoffisoliert (90) sind.

3. Schaltvorrichtung nach Anspruch 2, wobei der feststoffisolierte Verbindungsdraht (70) und die feststoffisolierte Sammelschiene (60) an einer Masseplatte (2) befestigt sind, die zwischen den Phasen angeordnet ist.

4. Schaltvorrichtung nach einem der Ansprüche 1 bis 3, wobei der erste und der dritte Haupttrennschalter (110a, 110b, 110c) Hauptmasse- und Haupttrennschalter sind, die einen geschlossenen Zustand, einen getrennten Zustand oder einen Massezustand auswählen können.

5. Schaltvorrichtung nach einem der Ansprüche 1 bis 4, wobei der Lasttrennschalter (10) oder der Schutzschalter eine Lasttrennfähigkeit besitzt, während der erste und der dritte Haupttrennschalter (110a, 110b, 110c) und der fünfte, der zweite und der vierte Trennschalter (100, 120a, 120b, 120c) keine Lasttrennfähigkeit besitzen.

6. Schaltvorrichtung nach einem der Ansprüche 1 bis 5, wobei der zweite, der vierte und der fünfte Trennschalter (100, 120a, 120b, 120c) und der erste und der dritte Haupttrennschalter (110a, 110b, 110c) jeweils eine klingenartige bewegliche Elektrode (101, 111a, 111b, 111c, 121a, 121b, 121c) und eine fixe Elektrode (51a, 51b, 51c, 61a, 61b, 61c, 61v, 81a, 81b, 81c, 81v), die mit der beweglichen Elektrode (101, 111a, 111b, 111c, 121a, 121 b, 121c) in Kontakt kommt, aufweisen und in einem Behälter (1) angeordnet sind, der für jede Phase vorgesehen ist.

7. Schaltvorrichtung nach Anspruch 6, wobei der Behälter (1) hermetisch verschlossen ist; wobei ein Isolatorgas innerhalb des hermetisch verschlossenen Behälters (1) eingeschlossen ist; und wobei einzelne Phasen durch die Masseplatte (2) separiert sind.

8. Schaltvorrichtung nach Anspruch 7, wobei der Lasttrennschalter (10) ein Unterdruckventil (10) ist, dessen Umfang mit einem festen Isolator (30) feststoffisoliert ist; wobei die Oberfläche des festen Isolators (30) mit einem leitenden Masseanstrich bedeckt ist; und wobei das feststoffisolierte Unterdruckventil (10) in äußerlichen Kontakt mit dem hermetisch verschlossenen Behälter (1) gebracht wird.

9. Schaltvorrichtung nach Anspruch 7, wobei der Lasttrennschalter (10) das Unterdruckventil (10) ist; und wobei das Unterdruckventil (10) in dem hermetisch verschlossenen Behälter (1) aufgenommen ist.

10. Schaltvorrichtungs-Betriebsverfahren zum Betreiben einer Schaltvorrichtung nach einem der Ansprüche 1 bis 9, die einen Lasttrennschalter (10) oder einen Schutzschalter, der eine oder mehrere Einheiten einer Hauptschaltung öffnet und schließt, und ein erstes Kabel (42a, 42b, 42c), das für jede der einen oder der mehreren Einheiten einer Hauptschaltung eingerichtet ist und mit einer Lastseite verbunden ist, aufweist,
wobei die Schaltvorrichtung ferner Folgendes aufweist: einen zweiten Trennschalter (100, 120a, 120b, 120c), der für jede der einen oder der mehreren Einheiten der Hauptschaltung vorgesehen ist und zu diesen parallel angeordnet ist und der in Reihe mit dem Lasttrennschalter (10) oder dem Schutzschalter angeordnet ist, und
einen ersten Haupttrennschalter (110a, 110b, 110c), der zwischen jeder der einen oder der mehreren Einheiten der Hauptschaltung und jeder der einen oder der mehreren Einheiten des ersten Kabels (42a, 42b, 42c) angeordnet ist;
wobei das Schaltvorrichtungs-Betriebsverfahren die folgenden Schritte umfasst:
Bilden eines elektrischen Strompfads, der den Lasttrennschalter (10) oder den Schutzschalter ausklammert und die Hauptschaltung zu dem Zeitpunkt der normalen elektrischen Leitung mit Strom versorgt; und
Umschalten zu einem elektrischen Strompfad, der den Lasttrennschalter (10) oder den Schutzschalter einschließt und den elektrischen Strom der Hauptschaltung unterbricht oder die Hauptschaltung zu dem Zeitpunkt des Unterbrechens der Hauptschaltung durch den Lasttrennschalter oder den Schutzschalter herstellt oder die Hauptschaltung herstellt;
wobei das Schaltvorrichtungs-Betriebsverfahren bei dem Umschalten einer der Einheiten der Hauptschaltung von einem geschlossenen Zustand in einen getrennten Zustand ferner die folgenden Schritte umfasst:
Verbinden des zweiten Trennschalters (100, 120a, 120b, 120c), der zu der einen der Einheiten der Hauptschaltung parallel angeordnet ist, mit der einen der Einheiten der Hauptschaltung;
Schließen des Lasttrennschalters (10) oder des Schutzschalters nach dem obigen Schritt;
Schalten des ersten Haupttrennschalters (110a, 110b, 110c) in einen getrennten Zustand nach dem obigen Schritt;
Schalten des Lasttrennschalters (10) oder des Schutzschalters von einem geschlossenen Zustand in einen unterbrochenen Zustand nach dem obigen Schritt;
Isolieren des zweiten Trennschalters (100, 120a, 120b, 120c) von der einen der Einheiten der Hauptschaltung nach dem obigen Schritt, um in einen getrennten Zustand zu schalten.

11. Schaltvorrichtungs-Betriebsverfahren nach Anspruch 10, das bei dem Umschalten einer der Einheiten der Hauptschaltung von einem getrennten Zustand in einen geschlossenen Zustand die folgenden Schritte umfasst:
Verbinden des zweiten Trennschalters (120a, 120b, 120c), der zu der einen der Einheiten der Hauptschaltung parallel angeordnet ist, mit der einen der Einheiten der Hauptschaltung;
Schließen des Lasttrennschalters (10) oder des Schutzschalters nach dem obigen Schritt;
Schalten des ersten Haupttrennschalters (110a, 110b, 110c) in einen geschlossenen Zustand nach dem obigen Schritt;
Schalten des Lasttrennschalters (10) oder des Schutzschalters von einem geschlossenen Zustand in einen unterbrochenen Zustand nach dem obigen Schritt;
Isolieren des zweiten Trennschalters (100, 120a, 120b, 120c) von der einen der Einheiten der Hauptschaltung nach dem obigen Schritt, um in einen getrennten Zustand zu schalten.

12. Schaltvorrichtungs-Betriebsverfahren nach Anspruch 10 oder 11, wobei der fünfte Trennschalter (100) an nur einem Ende des Lasttrennschalters (10) oder des Schutzschalters angeordnet ist; und wobei das Schalten des zweiten Trennschalters (120a, 120b, 120c) in dem gleichen Schritt der obigen Schritte ausgeführt wird.

13. Schaltvorrichtungs-Betriebsverfahren nach einem der Ansprüche 10 oder 11, wobei die Schaltvorrichtung einen Masse- und Trennschalter (100) aufweist, der zwischen dem Lasttrennschalter (10) oder dem Schutzschalter und der Hauptschaltung angeordnet ist, um einen geschlossenen Zustand, einen getrennten Zustand oder einen Massezustand auszuwählen, und einen Hauptmasse-und Haupttrennschalter (110a, 110b, 110c) aufweist, der zwischen der Hauptschaltung und dem ersten Kabel (42a, 42b, 42c) angeordnet ist, wobei das Schaltvorrichtungs-Betriebsverfahren bei dem Umschalten einer der Einheiten der Hauptschaltung von einem getrennten Zustand in einen Massezustand die folgenden Schritte umfasst:
Verbinden des zweiten Trennschalters (120a, 120b, 120c) mit der einen der Einheiten der Hauptschaltung und Schalten des Masse- und Trennschalters (100) in einen Massezustand;
Schließen des Lasttrennschalters (10) oder des Schutzschalters nach dem obigen Schritt;
Schalten des Hauptmasse- und Haupttrennschalters (110a, 110b, 110c) in einen Massezustand nach dem obigen Schritt;
Schalten des Lasttrennschalters (10) oder des Schutzschalters von einem geschlossenen Zustand in einen unterbrochenen Zustand, Schalten des Masse- und Trennschalters (100) in einen getrennten Zustand und Isolieren des zweiten Trennschalters (100, 120a, 120b, 120c) von der einen der Einheiten der Hauptschaltung, um in einen getrenriten Zustand zu schalten, nach dem obigen Schritt.

14. Schaltvorrichtungs-Betriebsverfahren nach Anspruch 13, wobei das Schalten einer der Einheiten der Hauptschaltung von dem getrennten Zustand in den Massezustand durch Schalten des Hauptmasse- und Haupttrennschalters (110a, 110b, 110c) in einen getrennten Zustand erreicht wird.

## Revendications

1. Appareillage de commutation comprenant : un circuit principal ayant un premier déconnecteur principal (110a, 110b, 110c) qui est capable de commuter sélectivement entre une position de fermeture et une position de déconnexion, et un premier câble (42a, 42b, 42c) qui est connecté à une extrémité du premier déconnecteur principal (110a, 110b, 110c) ;
une barre de bus (60), qui est connectée à l'autre extrémité du premier déconnecteur principal (110a, 110b, 110c) ;
un second déconnecteur (120a, 120p, 120c), qui est disposé en parallèle avec le premier déconnecteur principal (110a, 110b, 110c) ; et
un commutateur à rupture de charge (10) ou un coupe-circuit, qui est disposé en parallèle avec le premier déconnecteur principal (110a, 110b, 110c) et en série avec le second déconnecteur (120a, 120b, 120c) ;
un autre circuit principal ayant un troisième déconnecteur principal (110a, 110b, 110c) qui est connecté à une extrémité à la barre de bus (60) et capable de commuter sélectivement entre une position de fermeture et une position de déconnexion, et un second câble (42a, 42b, 42c) qui est connecté à l'autre extrémité du troisième déconnecteur principal (110a, 110b, 110c) ;
un quatrième déconnecteur (120a, 120b, 120c) qui est connecté en parallèle avec le troisième déconnecteur principal (110a, 110b, 110c) et connecté en série avec le commutateur à rupture de charge (10) ou le coupe-circuit ; et
un fil de connexion (70) qui connecte le second déconnecteur (120a, 120b, 120c) au quatrième déconnecteur (120a, 120b, 120c) ; **caractérisé en ce que**
un cinquième déconnecteur (100) est disposé uniquement à une extrémité du commutateur de rupture de charge (10) ou du coupe-circuit, et le second et le quatrième déconnecteur (120a, 120b, 120c) sont disposés à l'autre extrémité du commutateur de rupture de charge (10) ou du coupe-circuit à laquelle le cinquième déconnecteur (100) n'est pas disposé, dans lequel le cinquième déconnecteur (100) est un commutateur de mise à la terre et de déconnexion (100) capable de sélectionner un état fermé, un état déconnecté, ou un état de mise à la terre, et est connecté sélectivement soit à la barre de bus (60) soit à un fil de mise à la terre (80), qui est au potentiel de terre, pour commuter entre un état de fermeture et un état de mise à la terre, et dans lequel le second et le quatrième déconnecteur (120a, 120b, 120c) sont prévus pour le premier et le second câble (42a, 42b, 42c) respectivement et connectés au premier et au second câble (42a, 42b, 42c) respectivement.

2. Appareillage de commutation selon la revendication 2, dans lequel le fil de connexion (70) et la barre de bus (60) sont isolés par une isolation solide (90).

3. Appareillage de commutation selon la revendication 2, dans lequel le fil de connexion (70) isolé par une isolation solide et la barre de bus (60) sont fixés à une plaque de terre (2) qui est disposée entre les phases.

4. Appareillage de commutation selon l'une quelconque des revendications 1 à 3, dans lequel le premier et le troisième déconnecteur principaux (110a, 110b, 110c) sont des commutateurs principaux de mise à la terre et de déconnexion capables de sélectionner un état fermé, un état déconnecté, ou un état de mise à la terre.

5. Appareillage de commutation selon l'une quelconque des revendications 1 à 4, dans lequel le commutateur de rupture de charge (10) ou le coupe-circuit présente une capacité de coupure de charge alors que le premier et le troisième déconnecteur principaux (110a, 110b, 110c) et le cinquième, le second et le quatrième déconnecteur (100, 120a, 120b, 120c) ne présentent pas de capacité de coupure de charge.

6. Appareillage de commutation selon l'une quelconque des revendications 1 à 5, dans lequel le second, le quatrième et le cinquième déconnecteur (100, 120a, 120b, 120c), et le premier et le troisième déconnecteur principaux (110a, 110b, 110c) incluent chacun une électrode mobile du type à lame (101, 111a, 111b, 111c, 121 a, 121b, 121e) et une électrode fixe (51a, 51b, 51c, 61a, 61b, 61c, 61v, 81a, 81b, 81c, 81v) qui vient en contact avec l'électrode mobile (101a, 111a, 111b, 111c, 121a, 121b, 121c), et qui sont disposées dans un conteneur (1) prévu pour chaque phase.

7. Appareillage de commutation selon la revendication 6, dans lequel le conteneur (1) est hermétiquement fermé ; dans lequel un gaz isolant est enfermé à l'intérieur du conteneur hermétiquement fermé (1) ; et dans lequel les phases individuelles sont séparées par la plaque de terre (2).

8. Appareillage de commutation selon la revendication 7, dans lequel le commutateur de rupture de charge (10) est une valve sous vide (10) dont la circonférence est isolée par un isolant solide avec un isolateur solide (30) ; dans lequel la surface de l'isolateur solide (30) est couverte avec une peinture conductrice mise à la terre ; et dans lequel la valve sous vide isolée par un isolant solide (10) est mis en contact externe avec le conteneur hermétiquement fermé (1).

9. Appareillage de commutation selon la revendication 7, dans lequel le commutateur de rupture de charge (10) est la valve sous vide (10); et dans lequel la valve sous vide (10) est logée dans le conteneur hermétiquement fermé (1).

10. Procédé de fonctionnement pour un appareillage de commutation, pour faire fonctionner l'appareillage de commutation selon l'une quelconque des revendications 1 à 9 qui inclut un commutateur de rupture de charge (10) ou un coupe-circuit, qui ouvre et qui ferme une ou plusieurs unités d'un circuit principal, et un premier câble (42a, 42b, 42c), qui est disposé pour chacune desdites une ou plusieurs unités du circuit principal et connecté vers un côté en charge,
dans lequel l'appareillage de commutation inclut en outre un second déconnecteur (100, 120a, 120b, 120c), qui est prévu pour et disposé en parallèle avec chacune desdites une ou plusieurs unités du circuit principal et disposé en série avec le commutateur de rupture de charge (10) ou le coupe-circuit, et
un premier déconnecteur principal (110a, 110b, 110c), qui est disposé entre chacune desdites une ou plusieurs unités du circuit principal et chacune desdites une ou plusieurs unités du premier câble (42a, 42b, 42c) ;
le procédé de fonctionnement pour appareillage de commutation comprenant les étapes consistant à :
former un trajet de courant électrique excluant le commutateur de rupture de charge (10) ou le coupe-circuit et exciter le circuit principal au moment de la conduction électrique normale ; et
commuter vers un trajet de courant électrique incluant le commutateur à rupture de charge (10) ou le coupe-circuit et interrompre le courant électrique du circuit principal, ou établir le circuit principal par le commutateur de rupture de charge ou le coupe-circuit au moment de l'interruption du courant électrique du circuit principal, ou établir le circuit principal ;
le procédé de fonctionnement pour appareillage de commutation comprenant en outre les étapes consistant à, lors de la commutation des unités du circuit principal depuis un état fermé vers un état déconnecté:
connecter le second déconnecteur (100, 120a, 120b, 120c), qui est disposé en parallèle avec l'une des unités du circuit principal, à ladite unité du circuit principal ;
après l'étape ci-dessus, fermer le commutateur de rupture de charge (10) ou le coupe-circuit ;
après l'étape ci-dessus, commuter le premier déconnecteur principal (110a, 110b, 110c) vers un état déconnecté ;
après l'étape ci-dessus, commuter le commutateur de rupture de charge (10) ou le coupe-circuit depuis un état fermé vers un état interrompu ; et
après l'étape ci-dessus, isoler le second déconnecteur (100, 120a, 120b, 120c) depuis ladite unité du circuit principal pour commuter vers un état déconnecté.

11. Procédé de fonctionnement pour appareillage de commutation selon la revendication 10, comprenant les étapes consistant à, lors de la commutation de l'une des unités du circuit principal depuis un état déconnecté vers un état fermé :
connecter le second déconnecteur (120a, 120b, 120c), qui est disposé en parallèle avec l'une des unités du circuit principal, vers ladite unité du circuit principal ;
après l'étape ci-dessus, fermer le commutateur de rupture de charge (10) ou le coupe-circuit ;
après l'étape ci-dessus, commuter le premier déconnecteur principal (110a, 110b, 110c) vers un état fermé ;
après l'étape ci-dessus, commuter le commutateur de rupture de charge (10) ou le coupe-circuit depuis un état fermé vers un état interrompu ; et
après l'étape ci-dessus, isoler le second déconnecteur (100, 120a, 120b, 120c) depuis l'une des unités du circuit principal pour commuter vers un état déconnecté.

12. Procédé de fonctionnement pour appareillage de commutation selon la revendication 10 ou 11, dans lequel le cinquième déconnecteur (100) est disposé uniquement à une extrémité du commutateur de rupture de charge (10) ou du coupe-circuit ; et dans lequel la commutation du second déconnecteur (120a, 120b, 120c) est exécutée dans la même étape des étapes ci-dessus.

13. Procédé de fonctionnement pour appareillage de commutation selon l'une quelconque des revendications 10 ou 11, dans lequel l'appareillage de commutation inclut un commutateur de mise à la terre et de déconnexion (100), qui est disposé entre le commutateur de rupture de charge (10) ou le coupe-circuit et le circuit principal pour sélectionner un état fermé, un état déconnecté, ou un état mis à terre, et un commutateur principal de mise à la terre et de déconnexion (110a, 110b, 110c), qui est disposé entre le circuit principal et le premier câble (42a, 42b, 42c), le procédé de fonctionnement pour appareillage de commutation comprenant les étapes consistant à, lorsqu'on commute l'une des unités du circuit principal depuis un état déconnecté vers un état mis à terre :
connecter le second déconnecteur (120a, 120b, 120c) vers l'une des unités du circuit principal et commuter le commutateur de mise à la terre et de déconnexion (100) vers un état mis à terre ;
après l'étape ci-dessus, fermer le commutateur de rupture de charge (10) ou le coupe-circuit ;
après l'étape ci-dessus, commuter le commutateur principal de mise à terre et de déconnexion (110a, 110b, 110c) vers un état mis à terre ;
et après l'étape ci-dessus, commuter le commutateur de rupture de charge (10) ou le coupe-circuit depuis un état fermé vers un état interrompu, commuter le commutateur de mise à la terre et de déconnexion (100) vers un état déconnecté, et isoler le second déconnecteur (120a, 120b, 120c) depuis l'une des unités du circuit principal pour commuter vers un état déconnecté.

14. Procédé de fonctionnement pour appareillage de commutation selon la revendication 13, dans lequel la commutation de l'une des unités du circuit principal depuis l'état déconnecté vers l'état mis à terre est accomplie en commutant le commutateur principal de mise à la terre et de déconnexion (110a, 110b, 110c) vers un état déconnecté.
